# EUROPÄISCHE PATENTSCHRIFT

(11) **EP 0 600 861 B1**
(45) Veröffentlichungstag und Bekanntmachung des Hinweises auf die Patenterteilung: **16.07.1997**
(21) Anmeldenummer: 91908235.4
(22) Anmeldetag: 29.04.1991
(51) Int. Cl.: B29C 67/24, B29C 37/00, B29K 75/00, B29K 105/04

(54) **VERFAHREN UND VORRICHTUNG ZUR HERSTELLUNG VON KUNSTSTOFF-FORMTEILEN**
PROCESS AND DEVICE FOR MANUFACTURING PLASTIC MOULDINGS
PROCEDE ET DISPOSITF POUR LA FABRICATION DE PIECES MOULEES EN MATIERE PLASTIQUE

(30) Priorität: 31.05.1990 DE 4017517
(43) Veröffentlichungstag der Anmeldung: 15.06.1994
(73) Patentinhaber: MAGNA PEBRA GmbH, 66280 Sulzbach (DE)
(72) Erfinder: EYERER, Peter, D-7302 Ostfildnern 4 (DE); FRANK, Uwe, D-7000 Stuttgart 61 (DE)
(74) Vertreter: Wolf, Eckhard, Dr.-Ing.
(86) Internationale Anmeldenummer: EP9100817
(87) Internationale Veröffentlichungsnummer: WO9118734

(56) Entgegenhaltungen:
- EP-A- 0 106 545
- EP-A- 0 136 098
- EP-A- 0 206 100
- EP-A- 0 320 650
- EP-A- 0 320 653
- EP-A- 0 354 017
- EP-A- 0 455 149
- WO-A-91/12898
- US-A- 2 832 995
- US-A- 3 586 560
- US-A- 3 798 095
- US-A- 3 817 211
- US-A- 4 588 538
- US-A- 4 728 387
- PATENT ABSTRACTS OF JAPAN, Band 9, Nr. 94 (M-374)[1817], 24. April 1985, & JP-A-59 220338 (ICHIKO KOGYO K.K.) 11 December 1984
- PATENT ABSTRACTS OF JAPAN, Band 12, Nr. 356 (M-745)[3203], 26. September 1988, & JP-A-63 112 126 (NIPPON ZEON CO., LTD) 17. Mai 1988,
- PATENT ABSTRACTS OF JAPAN, Band 9, Nr. 94 (M-374)[1817], 24. April 1985, & JP- A-59 220 337 (ICHIKO KOGYO K.K.) 11. Dezember 1984,
- PLASTVERARBEITER, Band 37, Nr. 11, November 1986, Seiten 80-89, (Speyer, DE), M. BEGEMANN et al.: "Bedingungen bei der Verarbeitung und ihr Einfluss", siehe Seite 82, mittlere Spalte, Absatz 3 - rechte Spalte, Absatz 3

## Beschreibung

Die Erfindung betrifft ein Verfahren zur Herstellung von Kunststoff-Formteilen, bei welchem mindestens zwei Reaktionskomponenten in dünnflüssigem Zustand unter Bildung eines mit Luft beladenen Reaktionsgemisches durchmischt werden, bei welchem Reaktionsgemisch über eine Angußstelle in eine Kavität eines Formwerkzeugs unter Verdrängung der darin befindlichen Luft und Aufbau eines Werkzeuginnendrucks eingespritzt und dort unter Bildung eines Formteils durch chemische Reaktion ausgehärtet wird, und bei welchem in zeitlicher Nähe des Einspritzendes der Werkzeuginnendruck erhöht und dabei das in einem gelartigen Übergangszustand bedindliche Reaktionsgemisch unter Komprimieren von Lufteinschlüssen verdichtet wird.

Die Erfindung betrifft außerdem eine Vorrichtung zur Durchführung des Verfahrens nach einem der Ansprüche 1 bis 17 gemäß Oberbegriff des Anspruchs 18.

Es handelt sich hierbei um das sogenannte RIM-Verfahren (RIM = Reaction Injection Moulding) zur Herstellung von Formteilen aus mikrozellularen Polyurethanen, Polyolefinen und Polyamiden sowie anderen vernetzten und unvernetzten Thermoplasten und Duroplasten, die gegebenenfalls durch Füllstoffe, wie Glasfasern verstärkt werden können (RRIM = Reinforced Reaction Injection Moulding). Ein wichtiger Vorteil dieser Kunststoffe besteht darin, daß die Reaktionskomponenten, wie Isocyanat und Polyol eine im Vergleich zu thermoplastischen Kunststoffen sehr niedrige dynamische Viskosität in der Größenordnung von 0,1 bis 1,5 Pa s besitzen, so daß ein hohes Fließweg-Wanddickenverhältnis erzielt werden kann. Die Einspritzzeit beträgt bei high-speed Polyurethansystemen regelmäßig nur 0,5 bis 1,5 s bei einem Einspritzdruck von 100 bis 200 bar. Aufgrund der hohen Reaktionsgeschwindigkeit sind auch die Entformzeiten relativ gering, so daß mit hohen Durchsatzraten gerechnet werden kann. (Zum Stand der Technik: "Kunststoffe im Fahrzeugbau - Technik und Wirtschaftlichkeit" VDI-Verlag Düsseldorf 1988, S. 197 bis 244).

Es ist ein Verfahren der eingangs angegebenen Art bekannt (EP-A-0 206 100), bei welchem das Reaktionsgemisch in einen erweiterten Formhohlraum eingebracht wird, wobei die Formwerkzeughälften zunächst nur bis auf 5 mm der endgültigen Schließstellung zusammengeführt werden. Diese Position wird während des Einfüllvorgangs aufrechterhalten. Erst nach Beendigung des Einfüllvorgangs werden die Formwerkzeughälften unter Aufbringung eines Nachdrucks über die gesamte Kavität in die endgültige Schließstellung gebracht. Dieses Verfahren ist vor allem bei dreidimensionalen Formteilen mit komplexer Geometrie nicht ohne weiteres anwendbar und führt nur zu einer globalen und daher unkontrollierbaren Verdichtung des gesamten Bauteils.

Weiter ist es bei Verfahren zur Herstellung von Formteilen aus Reaktionskunststoffen an sich bekannt (EP-A-0 354 017, JP-A-59-220338, JP-A-63-112126), den Werkzeuginnendruck durch Druckmittelzufuhr zu erhöhen.

Ein gewisses Problem bei der RIM-Technik stellten bisher die Oberflächenporen dar, die besonders in angußfernen Bereichen bei komplizierten Bauteilgeometrien und/oder bestimmten Fließ- und Formfüllvorgängen vermehrt auftreten. Dies wirkt sich vor allem bei einem nachträglichen Lackiervorgang nachteilig aus, wenn die nach außen offenen, mit Luft gefüllten Poren mit Lack überspritzt werden. Beim Aufheizen des Lackes und Aushärten von außen nach innen können auf diese Weise so hohe Drücke entstehen, daß es zu einer Eruption durch die Lackschicht hindurch kommt. Dadurch entstehen auf der Lackaußenseite stecknadelkopfgroße kraterförmige Öffnungen, die unter ästhetischen Gesichtspunkten nicht akzeptabel sind. Um diesen Nachteil zu vermeiden, hat man sich bereits mit Wischfüllern geholfen, die die Poren in der Werkstückoberfläche vor dem Lackieren verschließen sollen. Aber auch hier treten Probleme beispielsweise beim Entfetten auf, da hierbei der Wischfüller möglicherweise wieder ausgewaschen wird. Weiter hat es sich gezeigt, daß an den fertigen Formteilen zwischen den angußnahen und angußfernen Stellen Dichteunterschiede von bis zu 10 % auftreten können, die ihrerseits zu einer unerwünschten Variation in den mechanischen Eigenschaften des Formteils führen.

Der Erfindung liegt daher die Aufgabe zugrunde, das Verfahren der eingangs angegebenen Art dahingehend zu verbessern, daß mit relativ einfachen Maßnahmen auch bei großen und kompliziert gestalteten Formteilen die mechanischen Bauteileigenschaften an vorgegebenen Stellen positiv beeinflußt werden können.

Zur erfindungsgemäßen Lösung dieser Aufgabe werden das Verfahren gemäß Patentanspruch 1 und die Vorrichtung gemäß Patentanspruch 18 vorgeschlagen.

Weiter vorteilhafte Ausgestaltungen und Weiterbildungen der Erfindung ergeben sich aus den abhängigen Ansprüchen.

Die Erfindung geht von der Erkenntnis aus, daß bei der RIM/RRIM-Technik im allgemeinen und bei der PUR-RIM/RRIM-Technik im besonderen der Werkzeuginnendruck von der Angußstelle zu angußfernen Bereichen hin von etwa 30 auf 10 bar abnimmt. Die Dichtevariation über die Bauteillänge ist eine Folge dieses über die Kavitätslänge abfallenden Werkzeuginnendruckes. Wenn es also gelingt, den Werkzeuginnendruck vor allem in den angußfernen Bereichen zu erhöhen, so ist zu erwarten, daß auch die Materialdichte und damit die mechanischen Materialeigenschaften verbessert werden können. Voraussetzung hierfür ist jedoch, daß das Reaktionsgemisch aufgrund seiner Lufteinschlüsse im noch flüssigen oder gelartigen Zustand kompressibel ist. Andererseits muß mit der Druckbeaufschlagung so lange zugewartet werden, bis die Viskosität des Reaktionsgemisches im Verlauf des sehr rasch ablaufenden Reaktionsvorgangs einen Punkt erreicht hat, daß das Material durch die einwirkenden Druckkräfte noch in der gewünschten Weise in Nachbarbereiche hinein verdrängt werden kann, aber dabei keine durchgehenden Löcher entstehen. Dieser Bedingung kommt entgegen, daß die Kavität in Form einer Quellströmung gefüllt wird, bei der das Reaktionsgemisch wahrend des Schusses im Bereich der Kavitätswandung haftet und zunächst dort reagiert, so daß ein festerer Kanal für das nachströmende flüssigere Reaktionsgemisch gebildet wird. Aufgrund dieser dynamischen Vorgänge reagiert das Material in überraschender Weise von außen nach innen und nicht wie im stationären Fall von innen nach außen, so daß zumindest in zeitlicher Nähe zum Einspritzende vor allem in angußfernen Bereichen im Inneren des Formteils eine niedrigere Masseviskosität und damit eine höhere Kompressibilität vorherrscht.

Dementsprechend wird gemäß der Erfindung vorgeschlagen, daß der Werkzeuginnendruck durch Druckmittelzufuhr in mindestens einem bereits mit Reaktionsgemisch gefüllten angußfernen Bereich unter Ausgleich des beim Füllvorgang von der Angußstelle aus bis dorthin aufgetretenen Druckabfalls erhöht wird. Die Druckerhöhung kann dabei in dem Maße erfolgen, daß ein Teil der eingeschlossenen Luft im Reaktionsgemisch gelöst und die mikrozellulare Struktur dabei zusätzlich verdichtet wird. Um reproduzierbare Ergebnisse zu erhalten, wird die Druckerhöhung über ein mit dem Einspritzbeginn oder dem Einspritzende zeitlich korreliertes Triggersignal ausgelöst.

Vorteilhafterweise wird der Werkzeuginnendruck sprunghaft erhöht, wobei der Drucksprung eine in ihrem zeitlichen Verlauf an die Reaktionsgeschwindigkeit des Reaktionsgemisches, die lokale Wandstärke des Formteils und/oder die Menge des zu verdrängenden Materials angepaßte Anstiegsflanke aufweisen kann.

Gemäß einer bevorzugten Ausgestaltung der Erfindung wird der Werkzeuginnendruck durch die Zufuhr eines Druckmittels erhöht, wobei als Druckmittel entweder ein Druckgas, vorzugsweise Stickstoff oder eine Druckflüssigkeit verwendet werden kann.

Vorteilhafterweise wird das Druckmittel in dem Bereich zwischen Kavitätswand und Formteiloberfläche oder in ein im Formwerkzeug ausgespartes, beim Einspritzvorgang mit dem Reaktionsgemisch gefülltes Reservoir injiziert. Dabei kann das Druckmittel auch unter Hohl- oder Füllraumbildung in das Innere des Reaktionsgemisches injiziert werden.

Grundsätzlich ist es auch möglich, als Druckmittel ein weiteres, vorzugsweise gleichartiges Reaktionsgemisch zu verwenden, das zeitverzögert gemischt und an einer angußfernen weiteren Angußstelle in das Formnest eingespritzt wird.

Gemäß einer weiteren vorteilhaften Ausgestaltung der Erfindung wird der Werkzeuginnendruck durch eine auf das Reaktionsgemisch einwirkende, mit Druck beaufschlagte nachgiebige, vorzugsweise aus Gummi bestehende Membran oder durch einen entsprechenden Druckkolben erhöht. Die Membran oder der Druckkolben können dabei mit Druckgas oder einer Druckflüssigkeit beaufschlagt werden.

Im Falle von Polyurethan als Reaktionskunststoff hat es sich als besonders vorteilhaft erwiesen, wenn die Druckerhöhung 0,05 bis 2 s, vorzugsweise 0,1 bis 1 s nach dem Schußende ausgelöst wird. Die Druckerhöhung sollte dann etwa 2 bis 10 Sekunden, vorzugsweise 4 bis 6 Sekunden aufrechterhalten werden, wobei zur Vermeidung von Durchschüssen der Maximalwert in der Größenordnung von 30 bis 50 bar, vorzugsweise etwa 40 bar nicht sprunghaft, sondern allmählich mit einer Anstiegszeit von 0,1 bis 2 Sekunden eingestellt werden sollte.

Bei einer Vorrichtung zur Durchführung des erfindungsgemäßen Verfahrens, die einen eingangsseitig mit mindestens zwei dünnflüssigen Reaktionskomponenten beaufschlagbaren Mischkopf, eine am Mischkopfausgang angeordnete, über eine Steuereinrichtung ansteuerbare Mischkopfdüse, eine an die Mischkopfdüse angeschlossene und über diese unter Druck mit dem dünnflüssigen Reaktionsgemisch beaufschlagbare Kavität eines Formwerkzeugs, sowie Mittel zur Druckerhöhung innerhalb der Kavität nach dem Füllvorgang aufweist, wird gemäß der Erfindung vorgeschlagen, daß in mindestens einem angußfernen Bereich des Formwerkzeugs ein in die Kavität eingreifender oder einmündender, auf das in der Kavität befindliche Reaktionsgemisch unter lokaler Druckerhöhung einwirkender Druckerzeuger angeordnet ist, der über die Steuereinrichtung in zeitlicher Korrelation zur Mischkopfansteuerung ansteuerbar ist.

Vorteilhafterweise weist der Druckerzeuger eine mit Druckgas beaufschlagbare Gasdüse auf, wobei die Gasdüse als unter Vorspannung geschlossenes, zur Kavität hin öffnendes Sitzventil ausgebildet sein kann, dessen Ventilkörper unter der Einwirkung des Differenzdrucks zwischen dem Druckgas und dem Kavitätsinnendruck verschiebbar ist. Vorteilhafterweise ist das Sitzventil der Gasdüse über eine Steuerleitung betätigbar und über eine Begasungsleitung mit Druckgas beaufschlagbar. In der Begasungsleitung ist zweckmäßig ein als Wegeventil ausgebildetes Begasungsventil und ein auf der Düsenseite des Begasungsventils angeschlossenes, als Wegeventil ausgebildetes Entlastungsventil angeordnet. Entsprechend kann im Fall einer pneumatischen Ansteuerung des Sitzventils in der Steuerleitung ein als Wegeventil ausgebildetes Druckbeaufschlagungsventil und ein auf der Düsenseite des Druckbeaufschlagungsventils angeordnetes, als Wegeventil ausgebildetes Entlastungsventil angeordnet werden. Die Wegeventile sind ihrerseits zweckmäßig als über die Steuereinrichtung elektrisch betätigbare Magnetventile ausgebildet, die über eine mit der Mischkopfdüsenansteuerung zeitlich korrelierte Folgesteuerung betätigbar sind.

Zur Vermeidung einer sprunghaften Druckerhöhung kann in der Begasungsleitung ein Proportionalventil angeordnet werden, das über einen Rampengenerator zur Einstellung eines beim Durchsteuern des Begasungsventils auslösbaren definierten Druckanstiegs ansteuerbar ist. Die Begasungleitung kann im Bereich der Austrittsstelle der Gasdüse unmittelbar in die Kavität einmünden und dabei bis zu deren Begrenzungsfläche reichen oder in deren Inneres eingreifen. Grundsätzlich ist es auch möglich, zwischen Gasdüse und Kavität eine flexible Membran anzuordnen oder den Druckerzeuger als Druckkolben, insbesondere als Membrankolben auszubilden.

Anstelle einer Gasdüse kann als Druckerzeuger auch eine mit Druckflüssigkeit beaufschlagbare Flüssigkeitsdüse, beispielsweise eine weitere Mischkopfdüse vorgesehen werden. Um das unter Druck zu verdrängende Reaktionsgemisch aufzunehmen, kann in der Kavität eine über den Druckerzeuger mit Druck, insbesondere Druckgas beaufschlagbare Verdrängungskammer ausgespart werden.

Mit den erfindungsgemäßen Maßnahmen wird einmal erreicht, daß aufgrund der Materialverdichtung und einer eventuellen Hohlraumbildung die mechanischen Eigenschaften des Formteils in vorgegebenen Bereichen verbessert werden. Weiter werden etwaige Oberflächenporen geglättet, indem das Reaktionsgemisch unter der Einwirkung des erhöhten Werkzeuginnendrucks gegen die Kavitätswand gedrückt wird. Schließlich können Einfallstellen oder Oberflächenmarkierungen im Bereich von Materialanhäufungen, wie Verstärkungsrippen vermieden werden, wenn der Werkzeuginnendruck gezielt im Bereich der Materialanhäufung erhöht wird.

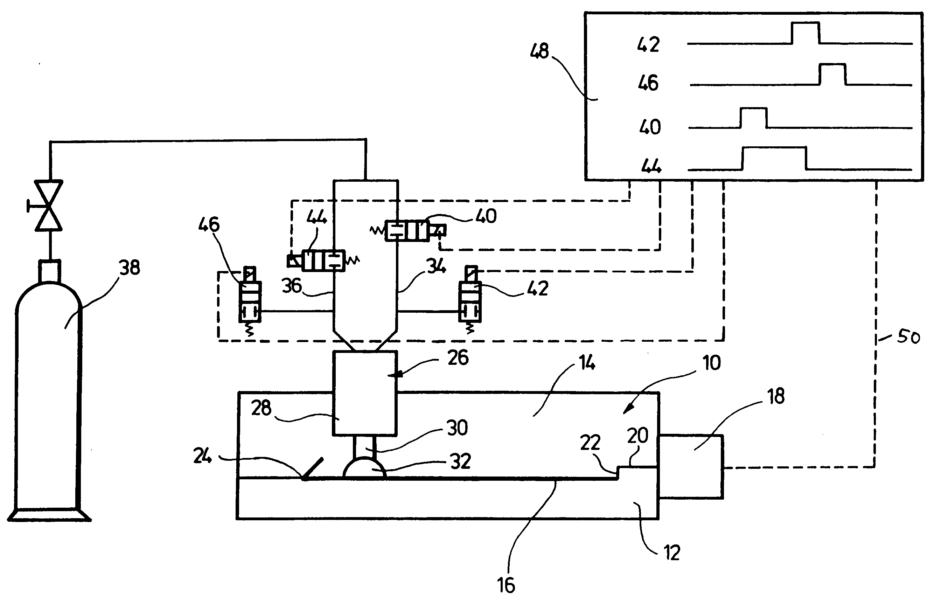

Weitere Einzelheiten der Erfindung werden im folgenden anhand des in der Zeichnung dargestellten Ausführungsbeispiels erläutert.

Die einzige Figur zeigt ein Schema einer Schäumanlage für Reaktionskunststoffe mit angußferner Druckbeaufschlagung.

Das Formwerkzeug 10 der Schäumanlage weist zwei Werkzeughälften 12 und 14 auf, zwischen denen eine langgestreckte Kavität 16 zur Herstellung eines dünnwandigen Werkstückes ausgespart ist. Das Formwerkzeug wird über einen Mischkopf 18 mit einem dünnflüssigen Reaktionsgemisch aus mindestens zwei dem Mischkopf getrennt zugeführten Reaktionskomponenten über eine Angußleitung 20 und die Angußstelle 22 unter Druck beaufschlagt. Die zunächst in der Kavität 16 befindliche Luft wird dabei über eine Entlüftungsleitung im Bereich des angußfernen Endes 24 des Formwerkzeugs 10 verdrängt. Aufgrund der Flüssigkeitsströmung vom angußnahen Ende 22 zum angußfernen Ende 24 tritt innerhalb der Kavität ein Druckabfall auf, der zu einer Dichteabnahme und damit zu unterschiedlichen mechanischen Eigenschaften sowie zu einer erhöhten Oberflächenporosität führen kann. Um dies zu vermeiden, ist im angußfernen Bereich des Formwerkzeugs 10 eine Vorrichtung 26 vorgesehen, mit der der Innendruck in der Kavität 16 lokal erhöht werden kann.

Die Vorrichtung 26 weist eine Gasdüse 28 auf, die an ihrem austrittsseitigen Ende 30 ein gasbetätigtes Sitzventil 30 enthält. Das Sitzventil 30 mündet in eine mit dem Reaktionsgemisch beaufschlagbare Verdrängungskammer 32, die Bestandteil der Kavität 16 ist und bei jedem Schuß mit dem Reaktionsgemisch gefüllt wird. Das Sitzventil der Gasdüse wird über eine Steuerleitung 34 pneumatisch betätigt und über eine Begasungsleitung 36 mit Druckgas, beispielsweise Stickstoff, aus einer Druckflasche 38 beaufschlagt.

Die Druckbeaufschlagung bzw. Entlastung der Gasdüse 28 erfolgt über vier elektrisch betätigbare, als 2/2-Wegeventile ausgebildete Magnetventile 40,42,44,46, die in der Steuerleitung 34 bzw. der Begasungsleitung 36 angeordnet sind. Die Ansteuerung der Wegeventile 40 bis 46 kann dabei über eine beispielsweise als Schützensteuerung ausgebildete Steuereinrichtung 48 erfolgen, wobei die Ventilschaltzustände über sechs Zeitrelais einstellbar sind. Der zeitliche Ablauf der Ventilansteuerung wird über die Steuerleitung 50 mit dem Signal "Mischkopfdüse auf" der Schäumanlage gestartet (Einspritzbeginn).

Nach Ablauf einer Verzögerungszeit, die mindestens der Schußzeit entsprechen sollte, öffnen die Ventile 40 in der Steuerleitung 34 und 44 in der Begasungsleitung 36, wobei das Sitzventil 30 der Gasdüse 48 geöffnet und das Reaktionsgemisch im Werkzeug 10 zugleich mit Druckgas mit einem Druck von etwa 40 bis 50 bar beaufschlagt wird.

Nach Ablauf der Begasungszeit, die einige Sekunden betragen kann, wird zuerst das Ventil 40 geschlossen und anschließend über das Ventil 42 die Leitung 34 drucklos gemacht. Dabei muß die Begasungsleitung 36 noch unter Druck stehen, damit ein Eindringen von Reaktionsgemisch in die Gasdüse 28 vermieden wird. Erst wenn die Leitung 34 drucklos ist, wird das Begasungsventil 44 geschlossen und anschließend das Entgasungsventil 46 geöffnet, um auch die Begasungsleitung 36 zu entlüften. Mit dem Schließen des Ventils 46 wird die Ventilsteuerung in den Ausgangszustand zurückversetzt. In der Begasungsleitung 36 kann ein nicht dargestelltes Proportionalventil angeordnet werden, das zur Steuerung der Druckanstiegsflanke über einen Rampengenerator ansteuerbar ist.

### Ausführungsbeispiel

Zur Durchführung von Versuchen wurde eine Schäumanlage mit einem Formwerkzeug zur Herstellung von Formteilen mit folgenden Abmessungen verwendet:

| | |
|---|---|
| Länge | ca. 1.220 mm |
| Höhe | ca. 230 mm |
| Wandstärke | ca. 3,5 mm. |

Die Gasdüse war im Werkzeugoberteil 14 angußfern eingebaut und mündete in eine Verdrängungskammer 32 mit einem Volumen von ca. 29 cm³.

Als Reaktionskunststoff wurde Polyurethan verwendet, dessen Reaktionspartner Polyol und Isocyanat mit einem Mischungsverhältnis von 100 : 47,8 (volumentrisch) in einem Querschiebermischkopf 18 gemischt wurden.

Die weiteren Verfahrensparameter waren wie folgt:
- Glasfasergehalt: : 15 %
- Gasbeladung: : 60 %
- Materialtemperatur: : 40 °C
- Werkzeugtemperatur: : 60 °C (oben und unten)
- Komponentendruck: : 200 bar
- Dosiervolumen: : 1,1 l
- Schußzeit: : 0,77 s
- Formstandzeit: : 30 s
- Begasungszeitpunkt: : 0,9 bis 2 s nach Schuß
- Begasungsdauer: : 5 s
- Begasungsdruck: : 40 bar.

Das vom Druckgas verdrängte Volumen betrug etwa 20 cm³.

Die Materialeigenschaften des auf diese Weise erhaltenen Formteils mit und ohne Druckbeaufschlagung ergeben sich aus der nachstehenden Tabelle:

| | Mit Gasinnendruck | Ohne Gasinnendruck |
|---|---|---|
| Dichte | 1,31 g/cm³ | 1,2 g/cm³ |
| E-Modul | 1.600 N/mm² | 950 N/mm². |

Zusammenfassend ist folgendes festzustellen: Die Erfindung bezieht sich auf ein Verfahren zur Herstellung von Kunststoff-Formteilen aus einem Reaktionsschaumstoff, wie Polyurethan, bei welchem mindestens zwei Reaktionskomponenten in dünnflüssigem Zustand unter Einschluß feinverteilter Luft durchmischt werden, und das dabei entstehende Reaktionsgemisch über eine Angußstelle in ein zusammenhängendes Formnest eines Formwerkzeugs unter Verdrängung der darin befindlichen Luft und Aufbau eines von der Angußstelle zu angußfernen Bereichen hin abnehmenden Werkzeuginnendrucks eingespritzt und dort unter Bildung eines Formteils durch chemische Reaktion ausgehärtet wird. Zur Verbesserung der mechanischen Bauteileigenschaften und zur Glättung von Oberflächenporen wird in zeitlicher Nähe des Einspritzendes der Werkzeuginnendruck in mindestens einem, vorzugsweise angußfernen, bereits mit Reaktionsgemisch gefüllten Bereich erhöht und dabei das in einem gelartigen Übergangszustand befindliche Reaktionsgemisch unter Komprimieren und/oder Lösen der Lufteinschlüsse verdichtet.

## Patentansprüche

1. Verfahren zur Herstellung von Kunststoff-Formteilen, bei welchem mindestens zwei Reaktionskomponenten in dünnflüssigem Zustand unter Bildung eines mit Luft beladenen Reaktionsgemisches durchmischt werden, bei welchem das Reaktionsgemisch über eine Angußstelle (22) in eine Kavität (16) eines Formwerkzeugs (10) unter Verdrängung der darin befindlichen Luft und Aufbau eines Werkzeuginnendrucks eingespritzt und dort unter Bildung eines Formteils durch chemische Reaktion ausgehärtet wird, und bei welchem in zeitlicher Nähe des Einspritzendes der Werkzeuginnendruck erhöht und dabei das in einem gelartigen Übergangszustand befindliche Reaktionsgemisch unter Komprimieren von Lufteinschlüssen verdichtet wird, **dadurch gekennzeichnet,** daß der Werkzeuginnendruck durch Druckmittelzufuhr in mindestens einem bereits mit Reaktionsgemisch gefüllten angußfernen Bereich unter Ausgleich des beim Füllvorgang von der Angußstelle (22) aus bis dorthin aufgetretenen Druckabfalls erhöht wird.

2. Verfahren nach Anspruch 1, **dadurch gekennzeichnet,** daß zumindest ein Teil der eingeschlossenen Luft durch die Druckerhöhung im Reaktionsgemisch gelöst wird.

3. Verfahren nach einem der Ansprüche 1 oder 2, **dadurch gekennzeichnet,** daß das Reaktionsgemisch unter Glättung von Oberflächenporen gegen die Kavitätswandung gedrückt wird.

4. Verfahren nach einem der Ansprüche 1 bis 3, **dadurch gekennzeichnet,** daß die Druckerhöhung über ein mit dem Einspritzbeginn oder dem Einspritzende zeitlich korreliertes Triggersignal ausgelöst wird.

5. Verfahren nach einem der Ansprüche 1 bis 4, **dadurch gekennzeichnet,** daß der Werkzeuginnendruck sprunghaft erhöht wird.

6. Verfahren nach Anspruch 5, **dadurch gekennzeichnet,** daß der Drucksprung eine in ihrem zeitlichen Verlauf an die Reaktionsgeschwindigkeit des Reaktionsgemischs, die lokale Wandstärke des Formteils und/oder die Menge des zu verdrängenden Materials angepaßte Anstiegsflanke aufweist.

7. Verfahren nach einem der Ansprüche 1 bis 6, **dadurch gekennzeichnet,** daß als Druckmittel ein Druckgas, vorzugsweise Stickstoff verwendet wird.

8. Verfahren nach einem der Ansprüche 1 bis 6, **dadurch gekennzeichnet,** daß als Druckmittel eine Druckflüssigkeit verwendet wird.

9. Verfahren nach einem der Ansprüche 1 bis 6, **dadurch gekennzeichnet,** daß als Druckmittel ein weiteres, vorzugsweise gleichartiges Reaktionsgemisch verwendet wird, das zeitverzögert gemischt und an einer angußfernen weiteren Angußstelle in die Kavität eingespritzt wird.

10. Verfahren nach einem der Ansprüche 1 bis 9, **dadurch gekennzeichnet,** daß das Druckmittel in den Bereich zwischen Kavitätswand und Formteiloberfläche injiziert wird.

11. Verfahren nach einem der Ansprüche 1 bis 9, **dadurch gekennzeichnet,** daß das Druckmittel in ein im Formwerkzeug (10) ausgespartes, mit dem Reaktionsgemisch beim Einspritzvorgang gefülltes Reservoir injiziert wird.

12. Verfahren nach einem der Ansprüche 1 bis 11, **dadurch gekennzeichnet,** daß das Druckmittel unter Hohl- oder Füllraumbildung in das Innere des Reaktionsgemischs injiziert wird.

13. Verfahren nach einem der Ansprüche 1 bis 12, **dadurch gekennzeichnet,** daß der Werkzeuginnendruck durch eine auf das Reaktionsgemisch einwirkende, mit Druck beaufschlagte nachgiebige, vorzugsweise aus Gummi bestehende Membran oder einen entsprechenden Druckkolben erhöht wird.

14. Verfahren nach Anspruch 13, **dadurch gekennzeichnet,** daß die Membran oder der Druckkolben mit Druckgas oder Druckflüssigkeit beaufschlagt wird.

15. Verfahren nach einem der Ansprüche 1 bis 14, **dadurch gekennzeichnet,** daß im Falle von Polyurethan als Reaktionskunststoff die Druckerhöhung 0,05 bis 2 s, vorzugsweise 0,1 bis 1 s nach dem Einspritzende ausgelöst wird.

16. Verfahren nach einem der Ansprüche 1 bis 15, **dadurch gekennzeichnet,** daß im Falle von Polyurethan als Reaktionskunststoff die Druckerhöhung über eine Zeitdauer von 2 bis 10 s, vorzugsweise 4 bis 6 s aufrechterhalten wird.

17. Verfahren nach einem der Ansprüche 1 bis 16, **dadurch gekennzeichnet,** daß im Falle von Polyurethan als Reaktionskunststoff bei der Druckerhöhung ein Druck von 30 bis 50 bar, vorzugsweise etwa 40 bar eingestellt wird.

18. Vorrichtung zur Durchführung des Verfahrens nach einem der Ansprüche 1 bis 17, mit einem eingangsseitig mit mindestens zwei dünnflüssigen Reaktionskomponenten beaufschlagbaren Mischkopf (18), mit einer am Mischkopfausgang angeordneten, über eine Steuereinrichtung ansteuerbaren Mischkopfdüse, mit einer an die Mischkopfdüse angeschlossenen und über diese unter Druck mit dünnflüssigem Reaktionsgemisch beaufschlagten Kavität (16) eines Formwerkzeugs (10), sowie mit Mitteln zur Druckerhöhung innerhalb der Kavität (16) nach dem Füllvorgang, **dadurch gekennzeichnet,** daß in mindestens einem angußfernen Bereich des Formwerkzeugs (10) ein in die Kavität (16) eingreifender oder einmündender, auf das in der Kavität befindliche Reaktionsgemisch unter lokaler Druckerhöhung einwirkender Druckerzeuger (26) angeordnet ist, der über die Steuereinrichtung (48) in zeitlicher Korrelation zur Mischkopfdüsenansteuerung ansteuerbar ist.

19. Vorrichtung nach Anspruch 18, **dadurch gekennzeichnet,** daß der Druckerzeuger (26) eine mit Druckgas (38) beaufschlagbare Gasdüse (28) aufweist.

20. Vorrichtung nach Anspruch 19, **dadurch gekennzeichnet,** daß die Gasdüse (28) als unter Vorspannung geschlossenes, zur Kavität (16) hin öffnendes Sitzventil (30) ausgebildet ist, dessen Ventilkörper unter der Einwirkung des Differenzdrucks zwischen dem Druckgas und dem Kavitätsinnendruck verschiebbar ist.

21. Vorrichtung nach Anspruch 20, **dadurch gekennzeichnet,** daß das Sitzventil (30) der Gasdüse (28) über eine Steuerleitung (34) betätigbar und über eine Begasungsleitung (36) mit Druckgas beaufschlagbar ist.

22. Vorrichtung nach Anspruch 21, **dadurch gekennzeichnet,** daß in der Begasungsleitung (36) ein als Wegeventil ausgebildetes Begasungsventil (44) und ein auf der Düsenseite des Begasungsventils (44) angeschlossenes, als Wegeventil ausgebildetes Entlastungsventil (46) angeordnet ist.

23. Vorrichtung nach Anspruch 21 oder 22, **dadurch gekennzeichnet,** daß in der pneumatischen Steuerleitung (34) ein als Wegeventil ausgebildetes Druckbeaufschlagungsventil (40) und ein auf der Düsenseite des Druckbeaufschlagungsventils (40) angeschlossenes, als Wegeventil ausgebildetes Entlastungsventil (42) angeordnet ist.

24. Vorrichtung nach Anspruch 22 oder 23**, dadurch gekennzeichnet,** daß die Wegeventile (40,42,44, 46) als über die Steuereinrichtung (48) elektrisch betätigbare Magnetventile ausgebildet sind.

25. Vorrichtung nach einem der Ansprüche 22 bis 24, **dadurch gekennzeichnet,** daß die Wegeventile (40, 42,44,46) über eine mit der Mischkopfdüsenansteuerung zeitlich korrelierte Folgesteuerung (48) betätigbar sind.

26. Vorrichtung nach einem der Ansprüche 21 bis 25, **gekennzeichnet durch** einen Rampengenerator und ein in der Begasungsleitung (36) angeordnetes Proportionalventil zur Einstellung eines beim Durchsteuern des Begasungsventils (44) auslösbaren definierten Druckanstiegs.

27. Vorrichtung nach einem der Ansprüche 19 bis 26, **dadurch gekennzeichnet,** daß die Gasdüse (28) unmittelbar in die Kavität (16) mündet.

28. Vorrichtung nach einem der Ansprüche 19 bis 26, **dadurch gekennzeichnet,** daß zwischen Gasdüse (28) und Kavität (16) eine flexible Membran angeordnet ist.

29. Vorrichtung nach einem der Ansprüche 19 bis 28, **dadurch gekennzeichnet,** daß die Austrittstelle der Gasdüse (28) im Bereich einer Begrenzungsfläche der Kavität (16) angeordnet ist.

30. Vorrichtung nach einem der Ansprüche 19 bis 28, **dadurch gekennzeichnet,** daß die Austrittsstelle der Gasdüse (28) in das Innere der Kavität (16) eingreift.

31. Vorrichtung nach einem der Ansprüche 19 bis 30, **dadurch gekennzeichnet,** daß der Druckerzeuger anstelle der Gasdüse (28) eine mit Druckflüssigkeit beaufschlagbare Flüssigkeitsdüse aufweist.

32. Vorrichtung nach Anspruch 18, **dadurch gekennzeichnet,** daß der Druckerzeuger als Druckkolben, insbesondere als Membrankolben ausgebildet ist.

33. Vorrichtung nach einem der Ansprüche 18 bis 32, **dadurch gekennzeichnet,** daß in der Kavität (16) eine über den Druckerzeuger (26) mit Druck, insbesondere Druckgas beaufschlagbare Verdrängungskammer (32) ausgespart ist.

## Claims

1. Process for the production of plastic mouldings in which at least two reactants in a highly liquid state are mixed together to form an air-laden reaction mixture, in which the reaction mixture is injected through a gate (22) into a cavity (16) of a mould (10) with displacement of the air in the cavity and build-up of internal pressure in the mould and is hardened by chemical reaction in the mould to form a moulding, and in which at approximately the time at which the injection is terminated the internal pressure in the mould is raised and the reaction mixture in a transitional gel-like state is compacted by compressing air inclusions, **characterized in that** the internal pressure in the mould is raised by the introduction of pressure media in at least one area remote from the gate which is already filled with reaction mixture, thus offsetting the drop in pressure which occurs during the filling process from the gate (22) to the remote area.

2. Process as in Claim 1, **characterized in that** at least a portion of the included air is dissolved in the reaction mixture by raising the pressure.

3. Process as in one of Claims 1 or 2, **characterized in that** the reaction mixture is pressed against the walls of the cavity, thus smoothing surface pores.

4. Process as in one of Claims 1 through 3, **characterized in that** the rise in pressure is initiated by a triggering signal synchronized with the start or the end of the injection.

5. Process as in one of Claims 1 through 4, **characterized in that** the internal pressure in the mould is raised abruptly.

6. Process as in Claim 5, **characterized in that** the jump in pressure exhibits a wave front the duration of which is adapted to the speed of the reaction in the reaction mixture, the local strength of the walls of the moulding and/or the quantity of material to be displaced.

7. Process as in Claims 1 through 6, **characterized in that** a pressure gas, preferably nitrogen, is used as a pressure medium.

8. Process as in Claims 1 through 6, **characterized in that** a hydraulic fluid is used as a pressure medium.

9. Process as in Claims 1 through 6, **characterized in that** an additional reaction mixture, preferably of the same kind, is used as a pressure medium the mixing of which is delayed in time, and is injected into the cavity at another gate remote from the gate (22).

10. Process as in one of Claims 1 through 9, **characterized in that** the pressure medium is injected into the region between the cavity wall and the surface of the moulding.

11. Process as in one of Claims 1 through 9, **characterized in that** the pressure medium is injected into a reservoir hollowed out in the mould (10) and filled with the reaction mixture while the injection is in progress.

12. Process as in one of Claims 1 through 11, **characterized in that** the pressure medium is injected into the interior of the reaction mixture while forming a hollow or filling space.

13. Process as in one of Claims 1 through 12, **characterized in that** the internal pressure in the mould is raised by means of a flexible diaphragm preferably made of rubber, or by an equivalent plunger, subjected to pressure and acting upon the reaction mixture.

14. Process as in Claim 13, **characterized in that** pressure gas or hydraulic fluid is applied to the diaphragm or the plunger.

15. Process as in one of Claims 1 through 14, **characterized in that**, when polyurethane is used as the reactant plastic, the increase in pressure is triggered 0.05 to 2 s, preferably 0.1 to 1 s, after the end of the injection.

16. Process as in one of Claims 1 through 15, **characterized in that**, when polyurethane is used as the reactant plastic, the increase in pressure is maintained for a period of 2 to 10 s, preferably 4 to 6 s.

17. Process as in one of Claims 1 through 16, **characterized in that**, when polyurethane is used as the reactant plastic, a pressure of 30 to 50 bar, preferably 40 bar approximately, is set when the pressure is increased.

18. Device for executing the process as in one of Claims 1 through 17, having a mixer head (18) to which at least two highly liquid reactants are admitted through the intake, a mixer head jet located at the outlet of the head and controllable by a control device, a cavity (16) of a mould (10), the cavity communicating with the jet and being loadable with the highly liquid reaction mixture under pressure through the jet, and means for raising pressure inside the cavity (16) after the filling process, **characterized in that** in at least one region of the mould (10) remote from the gate a pressure generator (26) is located which engages with or opens into the cavity (16) and acts upon the reaction mixture in the cavity while the pressure is raised locally; the operation of this unit through the control device (48) can be synchronized with the operation of the mixer head jet.

19. Device as in Claim 18, **characterized in that** the pressure generator (26) has a gas jet (28) to which pressure gas (38) can be admitted.

20. Device as in Claim 19, **characterized in that** the gas jet (28) takes the form of a seat valve (30) which is closed under preset tension and opens into the cavity (16) and that the seat valve body can be displaced by the effect of the pressure differential between the pressure gas and the internal pressure in the cavity.

21. Device as in Claim 20, **characterized in that** the seat valve (30) of the gas jet (28] can be activated through a control line (34) and receive pressure gas through a gas supply line (36)

22. Device as in Claim 21, **characterized in that** the gas supply line (36) contains a gas supply valve (44) designed as a directional valve, as well as a relief valve (46), attached to the jet side of the gas supply valve (44) and being designed as a directional valve.

23. Device as in Claim 21 or 22, **characterized in that** the pneumatic control line (34) contains a pressure-admission valve (40) designed as a directional valve, as well as a release valve (42) attached to the jet side of the pressure valve (40) and being designed as a directional valve.

24. Device as in Claim 22 or 23, **characterized in that** the directional valves (40, 42, 44, 46) take the form of solenoid valves which can be activated electrically through the control device (48)

25. Device as in one of Claims 22 through 24, **characterized in that** the directional valves (40, 42, 44, 46) can be activated through a sequence control (48) synchronized with the operation of the mixer head jet.

26. Device as in one of Claims 21 through 25, **characterized in that** it has a ramp generator and a proportional valve located in the gas supply line (36) for setting a defined rise in pressure which can be initiated by through switching of the gas supply valve (44).

27. Device as in one of Claims 19 through 26, **characterized in that** the gas jet (28) opens directly into the cavity (16).

28. Device as in one of Claims 19 through 26, **characterized in that** a flexible diaphragm is located between the gas jet (28) and the cavity (16).

29. Device as in one of Claims 19 through 28, **characterized in that** the outlet of the gas jet (28) is located near one boundary surface of the cavity (16).

30. Device as in one of Claims 19 through 28, **characterized in that** the outlet of the gas jet (28) projects into the interior of the cavity (16).

31. Device as in one of Claims 19 through 30, **characterized in that** instead of the gas jet (28), the pressure generator has a liquid jet to which hydraulic fluid can be admitted.

32. Device as in Claim 18, **characterized in that** the pressure generator takes the form of a plunger, in particular a diaphragm type plunger.

33. Device as in one of Claims 18 through 32, **characterized in that** a displacement chamber (32) is hollowed out in the cavity (16) to which pressure, in particular pressure gas, can be applied through the pressure generator (26).

## Revendications

1. Procédé de préparation de pièces moulées en matière synthétique, dans lequel au moins deux composants réactionnels à l'état fluide sont mélangés avec formation d'un mélange réactionnel chargé d'air, le mélange réactionnel étant, par l'intermédiaire d'un culot d'injection (22), injecté dans une cavité (16) d'un outil de moulage (10), avec déplacement de l'air situé dedans et constitution d'une pression interne d'outil et étant durci là par réaction chimique avec formation d'une pièce moulée, et dans lequel, à proximité immédiate de la fin de l'injection, la pression interne de l'outil est augmentée et le mélange réactionnel, qui se trouve dans un état de transition de type gel, est comprimé avec compression des inclusions d'air, caractérisé en ce que la pression interne d'outil est augmentée par un apport d'agent sous pression dans au moins une zone éloignée de l'injection, remplie déjà de mélange réactionnel, avec compensation de la chute de pression qui apparaît lors du processus de remplissage depuis le culot d'injection (22) jusque là.

2. Procédé suivant la revendication 1, caractérisé en ce qu'au moins une partie de l'air inclus est dissous dans le mélange réactionnel par l'augmentation de pression.

3. Procédé suivant l'une des revendications 1 et 2, caractérisé en ce que le mélange réactionnel est pressé contre la paroi de la cavité avec lissage des pores superficiels.

4. Procédé suivant l'une des revendications 1 à 3, caractérisé en ce que l'augmentation de pression est déclenchée par un signal de déclencheur prévu en corrélation dans le temps avec le début ou la fin de l'injection.

5. Procédé suivant l'une des revendications 1 à 4, caractérisé en ce que la pression interne d'outil est augmentée de manière brusque.

6. Procédé suivant la revendication 5, caractérisé en ce que le saut de pression présente un flanc de croissance adapté, dans son allure dans le temps, à la vitesse de réaction du mélange réactionnel, à l'épaisseur de paroi locale de la pièce moulée et/ou à la quantité de la matière à déplacer.

7. Procédé suivant l'une des revendications 1 à 6, caractérisé en ce qu'on utilise, comme agent sous pression, un gaz sous pression, de préférence de l'azote.

8. Procédé suivant l'une des revendications 1 à 6, caractérisé en ce qu'on utilise, comme agent sous pression, un liquide sous pression.

9. Procédé suivant l'une des revendications 1 à 6, caractérisé en ce qu'on utilise, comme agent sous pression, un mélange réactionnel supplémentaire, de préférence identique, qui est mélangé d'une manière retardée dans le temps et est injecté dans la cavité à un autre culot d'injection éloigné de l'injection.

10. Procédé suivant l'une des revendications 1 à 9, caractérisé en ce l'agent sous pression est injecté dans la zone entre une paroi de cavité et une surface de pièce moulée.

11. Procédé suivant l'une des revendications 1 à 9, caractérisé en ce que l'agent sous pression est injecté dans un réservoir qui est ménagé dans la pièce moulée (10) et rempli du mélange réactionnel lors du processus d'injection.

12. Procédé suivant l'une des revendications 1 à 11, caractérisé en ce que l'agent sous pression est injecté avec formation d'une cavité ou volume de remplissage à l'intérieur du mélange réactionnel.

13. Procédé suivant l'une des revendications 1 à 12, caractérisé en ce que la pression interne d'outil est augmentée par une membrane élastique, de préférence en caoutchouc, qui agit sur le mélange réactionnel et est sollicitée par une pression, ou par un piston de compression correspondant.

14. Procédé suivant l'une des revendications 13, caractérisé en ce que la membrane ou le piston de compression est sollicité par du gaz sous pression ou du liquide sous pression.

15. Procédé suivant l'une des revendications 1 à 14, caractérisé en ce que, dans le cas de polyuréthanne comme matière synthétique de la réaction, l'augmentation de pression est déclenchée 0,05 à 2 secondes, de préférence 0,1 à 1 seconde, après la fin de l'injection.

16. Procédé suivant l'une des revendications 1 à 15, caractérisé en ce que, dans le cas de polyuréthanne comme matière synthétique de la réaction, l'augmentation de pression est maintenue sur une période de temps de 2 à 10 secondes, de préférence de 4 à 6 secondes.

17. Procédé suivant l'une des revendications 1 à 16, caractérisé en ce que, dans le cas de polyuréthanne comme matière synthétique de la réaction, on ajuste lors de l'augmentation de pression une pression de 30 à 50 bars, de préférence d'environ 40 bars.

18. Dispositif pour la mise en oeuvre du procédé suivant l'une des revendications 1 à 17, comprenant une tête de mélange (18) qui peut être alimentée du côté entrée en au moins deux composants réactionnels fluides, un ajutage de tête de mélange qui est agencé à la sortie de la tête de mélange et peut être commandé par un dispositif de commande, une cavité (16) d'un outil de moulage (10) qui est raccordée à l'ajutage de tête de mélange et est alimentée sous pression par celui-ci en un mélange réactionnel fluide, ainsi que des moyens pour augmenter la pression à l'intérieur de la cavité (16) après le processus de remplissage, caractérisé en ce que, dans au moins une zone éloignée de l'injection de l'outil de moulage (10), est agencé un générateur de pression (26) qui pénètre ou débouche dans la cavité (16), agit sur le mélange réactionnel situé dans la cavité avec augmentation de la pression locale, et peut être commandé par l'intermédiaire du dispositif de commande (48) en corrélation dans le temps par rapport à la commande de l'ajutage de tête de mélange.

19. Dispositif suivant la revendication 18, caractérisé en ce que le générateur de pression (26) présente une tuyère à gaz (28) qui peut être alimentée en gaz sous pression (38).

20. Dispositif suivant la revendication 19, caractérisé en ce que la tuyère à gaz (28) est réalisée sous la forme d'une soupape à siège (30) qui est fermée sous tension initiale et est ouverte vers la cavité (16) et dont le corps de soupape peut être déplacé sous l'action de la pression différentielle entre le gaz sous pression et la pression interne de la cavité.

21. Dispositif suivant la revendication 20, caractérisé en ce que la soupape à siège (30) de la tuyère à gaz (28) est actionnable par l'intermédiaire d'une ligne de commande (34) et peut être alimentée en gaz sous pression par l'intermédiaire d'un conduit d'amenée de gaz (36).

22. Dispositif suivant la revendication 21, caractérisé en ce que, dans le conduit d'amenée de gaz (36), sont agencées une soupape d'amenée de gaz (44) qui est réalisée sous la forme d'un distributeur et une soupape de détente (46) qui est raccordée au côté tuyère de la soupape d'amenée de gaz (44) et est réalisée sous la forme d'un distributeur.

23. Dispositif suivant l'une des revendications 21 et 22, caractérisé en ce que, dans la ligne de commande pneumatique (34), sont agencées une soupape d'alimentation de pression (40) réalisée sous la forme d'un distributeur et une soupape de détente (42) qui est raccordée du côté tuyère de la soupape d'alimentation de pression (40) et qui est réalisée sous la forme d'un distributeur.

24. Dispositif suivant l'une des revendications 22 et 23, caractérisé en ce que les distributeurs (40, 42, 44, 46) sont réalisés sous la forme d'électrovannes actionnables électriquement par l'intermédiaire du dispositif de commande (48).

25. Dispositif suivant l'une des revendications 22 à 24, caractérisé en ce que les distributeurs (40, 42, 44, 46) sont actionnables par l'intermédiaire d'une commande séquentielle (48) mise en corrélation dans le temps avec la commande de l'ajutage de tête de mélange.

26. Dispositif suivant l'une des revendications 21 à 25, caractérisé par un générateur de déclivité et par une soupape proportionnelle qui est agencée dans le conduit d'amenée de gaz (36) pour l'ajustement d'une croissance de pression définie qui peut être déclenchée lors du passage de la soupape d'amenée de gaz (44).

27. Dispositif suivant l'une des revendications 19 à 26, caractérisé en ce que la tuyère à gaz (28) débouche directement dans la cavité (16).

28. Dispositif suivant l'une des revendications 19 à 26, caractérisé en ce qu'une membrane flexible est disposée entre la tuyère à gaz (28) et la cavité (16).

29. Dispositif suivant l'une des revendications 19 à 28, caractérisé en ce que l'emplacement de sortie de la tuyère à gaz (28) est agencé dans la zone d'une surface de limite de la cavité (16).

30. Dispositif suivant l'une des revendications 19 à 28, caractérisé en ce que l'emplacement de sortie de la tuyère à gaz (28) pénètre à l'intérieur de la cavité (16).

31. Dispositif suivant l'une des revendications 19 à 30, caractérisé en ce que le générateur de pression présente, au lieu d'une tuyère à gaz (28), une tuyère à liquide qui peut être alimentée en liquide sous pression.

32. Dispositif suivant la revendication 18, caractérisé en ce que le générateur de pression est réalisé sous la forme d'un piston de compression, en particulier sous la forme d'un piston à membrane.

33. Dispositif suivant l'une des revendications 18 à 32, caractérisé en ce qu'une chambre de déplacement (32), qui peut, par l'intermédiaire du générateur de pression (26), être alimentée en pression, en particulier en gaz sous pression, est ménagée dans la cavité (16).
